Europäisches Patentamt

European Patent Office

Office européen des brevets

(11) Veröffentlichungsnummer : **0 037 391**
**B1**

(12) **EUROPÄISCHE PATENTSCHRIFT**

(45) Veröffentlichungstag der Patentschrift :
21.03.84

(51) Int. Cl.³ : **B 21 F 27/10, B 23 K 11/10**

(21) Anmeldenummer : 81890053.2

(22) Anmeldetag : 30.03.81

(54) Strombrückenanordnung für eine nach der Doppelpunktschweißmethode arbeitende Schweißmaschine, insbesondere Gitterschweißmaschine.

(30) Priorität : 31.03.80 AT 1735/80

(43) Veröffentlichungstag der Anmeldung :
07.10.81 Patentblatt 81/40

(45) Bekanntmachung des Hinweises auf die Patenterteilung : 21.03.84 Patentblatt 84/12

(84) Benannte Vertragsstaaten :
BE CH DE FR GB LI

(56) Entgegenhaltungen :
AT-B- 259 993
AT-B- 298 204
DD-A- 88 238
DE-B- 1 107 856
DE-B- 1 176 299
US-A- 3 194 935

(73) Patentinhaber : EVG Entwicklungs- u. Verwertungs-Gesellschaft m.b.H.
Vinzenz-Muchitsch-Strasse 36
A-8011 Graz (AT)

(72) Erfinder : Gött, Hans, Dipl.-Ing.
Petersbergenstrasse 69 .
A-8042 Graz (AT)
Erfinder : Ritter, Gerhard, Dipl.-Ing. Dr.
Unterer Plattenweg 47
A-8043 Graz (AT)
Erfinder : Ritter, Klaus, Dipl.-Ing.
Peterstalstrasse 157
A-8042 Graz (AT)
Erfinder : Ritter, Josef, Dipl.-Ing. Dr.
Stenggstrasse 33
A-8043 Graz (AT)

(74) Vertreter : Holzer, Walter, Dipl.-Ing. et al
Patentanwälte Dipl.-Ing. Dr.techn. Schütz Alfred
Dipl.-Ing. Dr.techn. Pfeifer Rudolf Dr.phil. Mrazek
Engelbert Dipl.-Ing. Holzer Walter Dipl.-Ing. Pfeifer
Otto
Fleischmanngasse 9 A-1040 Wien (AT)

Strombrückenanordnung für eine nach der Doppelpunktschweißmethode arbeitende Schweißmaschine, insbesondere Gitterschweißmaschine

Die Erfindung betrifft eine Strombrückenanordnung für eine nach der Doppelpunktschweißmethode arbeitende Schweißmaschine, insbesondere Gitterschweißmaschine, mit zumindest einem Paar von in Richtung der Doppelpunktschweißstrecke gegeneinander versetzt angeordneten, an die Sekundärseite eines Schweißtransformators angeschlossenen aktiven Elektroden, denen jenseits der Schweißebene auf einer schwenkbar gelagerten und den Schweißdruck aufbringenden Strombrücke passive Gegenelektroden zugeordnet sind.

Eine für Gitterschweißmaschinen bestimmte Strombrückenanordnung dieser Gattung ist aus der AT-PS 259.993 bekannt. Bei der bekannten Strombrückenanordnung bilden der Lagerpunkt der Strombrücke an einem diese in Richtung senkrecht zur Schweißebene bewegenden Stößel und die beiden Berührungspunkte der oberen, an der Strombrücke angeordneten passiven Gegenelektroden mit dem einen der zu verschweißenden Gitterdrähte ein in sich starres Dreieck. Zufolge dieser Ausbildung kann sich die bekannte Strombrücke, insbesondere bei sehr eng benachbart liegenden Schweißpunkten, also bei Gittern mit sehr kleinen gegenseitigen Drahtabständen, nicht in freiem Spiel so einstellen, daß auf beide Schweißpunkte auch bei Schwankungen der Drahtdurchmesser stets der gleiche Schweißdruck aufgebracht wird, weil dies in der Regel eine seitliche Verschiebung des Anlenkpunktes der Strombrücke an den Stößel erfordern würde. Ähnliche Verhältnisse liegen bei einer aus der AT-PS 298.204 bekannten Strombrückenanordnung der einleitend angegebenen Gattung vor, bei welcher jede Strombrücke in zwei nahe ihren Enden liegenden Punkten durch Gelenke mit federbelasteten Andrückstangen verbunden ist, von denen jede nahe ihrem einen Ende einen Anschlagteil trägt, der selbstzentrierend mit einem als Gegenanschlag dienenden Sitz zusammenwirkt, während das andere Ende jeder Andrückstange mit radialem Spiel längsgeführt ist. Im Falle einer Doppelpunktschweißung ungleich dicker Drähte stellt sich hiebei die Strombrücke schräg und die Folge davon sind ungleich verteilte Schweißdrücke und daher auch ungleichmäßige Schweißungen.

Hier setzt die Erfindung ein. Sie soll die Aufgabe lösen, bei Schwankungen des Drahtdurchmessers unabhängig vom Abstand der Schweißpunkte in allen Fällen gleiche Elektrodendrücke und damit gleichmäßige Schweißungen sicherzustellen.

Diese Aufgabe wird erfindungsgemäß dadurch gelöst, daß ein die Strombrücke tragender Druckbalken vorgesehen ist, dessen Endteile bis in die Schweißebene auskragen und in normal zur Schweißebene verlaufenden Führungen gleitend und in der Balkenebene verschwenkbar geführt sind, und daß an den Endteilen des Druckbalkens in Höhe der Schweißebene die unteren Enden zweier Druckglieder angelenkt sind, deren obere Enden an den Enden eines mittig schwenkbar gelagerten, zur Verbindungslinie der Anlenkpunkte der unteren Enden der Druckglieder am Druckbalken achsparallelen zweiten Balkens angelenkt sind.

Auf diese Weise wird erreicht, daß der die Strombrücke mit den passiven Gegenelektroden tragende Druckbalken, die beiden an die Druckbalkenendteile angelenkten Druckglieder und der gelenkig mit diesen verbundene zweite Balken zusammen ein Gelenkviereck bilden, das eine derart freie Verstellung des Druckbalkens und damit der Strombrücke bezüglich der Schweißebene ermöglicht, daß die auf die beiden passiven Gegenelektroden wirkenden Schweißdrücke automatisch aneinander angeglichen werden.

Bei einer speziellen Ausführungsform der Erfindung sind als Druckglieder hydraulisch oder pneumatisch betätigbare Arbeitszylinder vorgesehen und der zweite Balken ist in seiner Mitte in einem Gelenk schwenkbar, aber unverschiebbar gelagert.

Bei einer anderen Ausführungsform sind als Druckglieder Schubstangen vorgesehen, der zweite Balken ist in seiner Mitte schwenkbar und in Richtung senkrecht zur Schweißebene verschiebbar gelagert und am Lagerpunkt des zweiten Balkens greift ein Arbeitszylinder an.

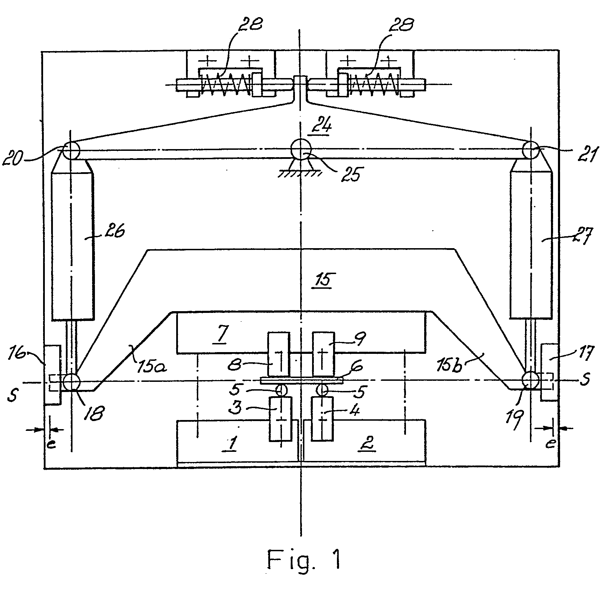

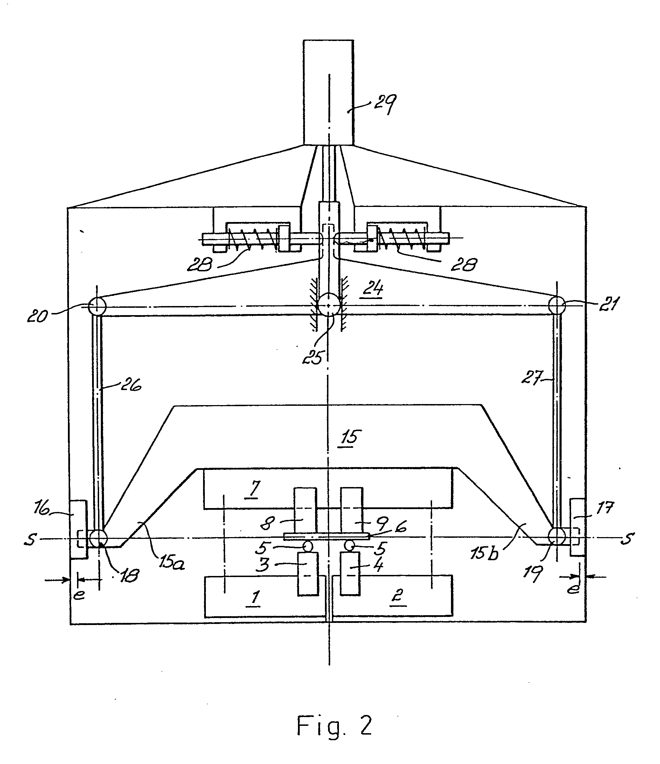

Diese beiden Ausführungsbeispiele der Erfindung sind in den Figuren 1 bzw. 2 der Zeichnung jeweils in Seitenansicht dargestellt und werden nachfolgend genauer beschrieben.

In Figur 1 sind zwei Stromschienen 1 und 2 erkennbar, welche sich in Richtung der Doppelpunktschweißstrecke erstrecken und durch eine nicht dargestellte Isolierung elektrisch voneinander getrennt sind. Auf diesen Stromschienen sind zwei aktive Elektroden 3, 4 verstellbar und feststellbar angeordnet. Jenseits der durch zwei Längsstäbe 5 und einen Querstab 6 definierten Gitterherstellungsoder Schweißebene S ist eine Strombrücke 7 erkennbar, welche die Form einer Stromschiene hat, längs welcher passive Gegenelektroden 8 und 9 verstellbar und feststellbar angeordnet sind.

Die aktiven Elektroden 3 und 4 können längs der ihnen zugeordneten, voneinander isolierten Stromschienen 1 und 2 entsprechend einer gewünschten Längsdrahtteilung eingestellt werden ; die passiven Gegenelektroden 8 und 9 werden auf der gemeinsamen Stromschiene oder Strombrücke 7 so eingestellt, daß sie je einer aktiven Elektrode gegenüberliegen. Insbesondere bei Einstellung einer kleinen Längsdrahtteilung, also eines kleinen gegenseitigen Elektrodenabstandes, ergibt sich bei den bekannten Strombrückenanordnungen der bereits erläuterte, durch die Erfindung zu behebende Mangel, daß die Schweißdrücke, die von der Strombrücke auf die beiden Gegenelektroden einer Doppelpunktschweißstrecke übertragen werden, infolge mangelnder freier Verstellbarkeit der Strombrücke im allgemeinen ungleich groß sind.

Erfindungsgemäß ist die Strombrücke 7 auf einem Druckbalken 15 angeordnet, dessen Enden 15a, 15b schräg nach unten bis in die Schweißebene S auskragen und in normal zu dieser Ebene verlaufenden Führungen 16, 17 gleitend geführt sind.

Wie aus Figur 1 erkennbar ist, ist zwischen der äußeren, senkrechten Begrenzung der Führungen 16, 17 und den zu dieser Begrenzung parallelen Balkenenden ein Zwischenraum e vorgesehen, so daß ein Verschwenken des Balkens 15 in der Balkenebene möglich ist.

In höhe der Schweißebene S sind an den Balkenenden 15a, 15b die unteren Enden 18, 19 von zwei Druckgliedern 26, 27 angelenkt. Zweckmäßig können an diesen Anlenkpunkten Führungsrollen vorgesehen werden, welche an den vorderen und hinteren Begrenzungen der Führungen 16, 17 abrollen, so daß der Balken 15 gegenüber der Mittelebene der Maschine stets exakt zentriert wird. Die oberen Enden 20, 21 der Druckglieder 26, 27 sind an den Enden eines zweiten Balkens 24 angelenkt. Die Achse des zweiten Balkens 24 verläuft parallel zur Verbindungslinie der Anlenkpunkte 18, 19 der Druckglieder 26, 27 am Elektrodenbalken 15 und damit auch parallel zur Schweißebene S. Der Balken 24 ist in einem Gelenk 25 schwenkbar und im dargestellten Beispiel unverschieblich gelagert. In der dargestellten Ausführungsform sind als Druckglieder 26, 27 hydraulisch oder pneumatisch betätigbare Arbeitszylinder vorgesehen.

Um die gesamte Schweißeinrichtung im Ruhezustand stets in einer vorgegebenen Ruhelage zu halten, können noch einstellbare Rückstellfedern 28 vorgesehen sein.

Gemäß Figur 2 können die Druckglieder 26, 27 auch als einfache Druckstangen ausgebildet sein, wobei dann das Gelenk 25 in Richtung der Symmetrieebene der Maschine verschiebbar ausgebildet werden muß. Für die Verschiebung dieses Gelenkes ist ein an einem Ende starr im Maschinengestell befestigter Arbeitszylinder 29 vorgesehen, dessen Kolbenstange an dem parallel zur Maschinenmittelebene geführten Gelenk 25 angreift.

## Ansprüche

1. Strombrückenanordnung für eine nach der Doppelpunktschweißmethode arbeitende Schweißmaschine, insbesondere Gitterschweißmaschine, mit zumindest einem Paar von in Richtung der Doppelpunktschweißstrecke gegeneinander versetzt angeordneten, an die Sekundärseite eines Schweißtransformators angeschlossenen aktiven Elektroden (3, 4), denen jenseits der Schweißebene (S) auf einer schwenkbar gelagerten und den Schweißdruck aufbringenden Strombrücke (7) passive Gegenelektroden (8, 9) zugeordnet sind, dadurch gekennzeichnet, daß ein die Strombrücke (7) tragender Druckbalken (15) vorgesehen ist, dessen Endteile (15a, 15b) bis in die Schweißebene (S) auskragen und in normal zur Schweißebene (S) verlaufenden Führungen (16, 17) gleitend und in der Balkenebene verschwenkbar geführt sind, und daß an den Endteilen des Druckbalkens (15) in Höhe der Schweißebene die unteren Enden (18, 19) zweier Druckglieder (26, 27) angelenkt sind, deren obere Enden (20, 21) an den Enden eines mittig schwenkbar gelagerten, zur Verbindungslinie der Anlenkpunkte der unteren Enden (18, 19) der Druckglieder am Druckbalken (15) achsparallelen zweiten Balkens (24) angelenkt sind.

2. Strombrückenanordnung nach Anspruch 1, dadurch gekennzeichnet, daß als Druckglieder (26, 27) hydraulisch oder pneumatisch betätigbare Arbeitszylinder vorgesehen sind und daß der zweite Balken (24) in seiner Mitte in einem Gelenk (25) schwenkbar, aber unverschiebbar gelagert ist.

3. Strombrückenanordnung nach Anspruch 1, dadurch gekennzeichnet, daß als Druckglieder (26, 27) Schubstangen vorgesehen sind, daß der zweite Balken (24) in seiner Mitte schwenkbar und in Richtung senkrecht zur Schweißebene (S) verschiebbar gelagert ist und daß ein am Lagerpunkt (25) des zweiten Balkens (24) angreifender Arbeitszylinder (29) vorgesehen ist.

4. Strombrückenanordnung nach einem der Ansprüche 1 bis 3 für eine Schweißmaschine, deren eine Doppelpunktschweißstrecke bildente aktiven Elektroden längs in Richtung der Doppelpunktschweißstrecke verlaufenden Stromschienen verstellbar und sodann fixierbar sind, dadurch gekennzeichnet, daß am Druckbalken (15) als Strombrücke eine in Richtung der Doppelpunktschweißstrecke verlaufende Stromschiene (7) angeordnet ist, an welcher die beiden passiven Gegenelektroden (8, 9) verstellbar und fixierbar angeordnet sind.

## Claims

1. Current bridge arrangement for a welding machine operating according to the double point welding method, in particular grid welding machine, comprising at least one pair of active electrodes (3, 4) which are displaced against each other in the direction of the double point welding interval and connected to the secondary side of a welding transformer, and passive counter electrodes (8, 9), associated to said active electrodes on the other side of the welding plane (S) on a current bridge (7) which is pivotally mounted and applies the welding pressure, characterized in that a pressure beam (15) is provided supporting said current bridge (7), the end portions (15a, 15b) of said pressure beam projecting into said welding plane (S) and being guided slidably in guides (16, 17) extending normally to said welding plane (S) and pivotally in the beam plane, and in that the lower ends (18, 19) of two pressure members (26, 27) are pivoted to the end portions of said pressure beam (15) in the welding plane level, the upper ends (20, 21) of said pressure members being pivoted to the ends of a second beam (24) pivotally supported at the centre thereof and extending with its axis in parallel to the line joining the pivot points of the lower ends (18, 19) of the pressure members on the pressure beam.

2. Current bridge according to claim 1, characterized in that said pressure members (26, 27) are hydraulically or pneumatically operated rams and in that said second beam (24) is pivotally but non-displaceably mounted in its center in a pivot (25).

3. Current bridge according to claim 1, characterized in that said pressure members (26, 27) are thrust rods, that said second beam (24) is pivotally supported in its center and displaceable normally to said welding plane (S) and that a ram (29) is provided engaging at the pivot point (25) of said second beam (24).

4. Current bridge according to one of the claims 1 to 3, for a welding machine whose active electrodes form a double point welding interval, are adjustable along the direction of bus bars extending in the direction of said double point welding zone, and adapted to be then fixed thereto, characterized in that a bus bar (7) extending in the direction of said double point welding interval is provided on said pressure beam (15) as a current bridge, the two passive counter electrodes (8, 9) being adapted to be adjusted on and fixed to said bus bar.

**Revendications**

1. Montage de pont de courant pour une soudeuse par points doubles, en particulier une soudeuse de treillis, comportant au moins une paire d'électrodes actives (3, 4) montées décalées l'une de l'autre dans la direction de l'intervalle de soudage par points doubles et connectées au secondaire d'un transformateur de soudage, auxquelles, de l'autre côté du plan de soudage (S), des contre-électrodes passives (8, 9) sont associées sur un pont de courant (7) monté à pivot et exerçant la pression de soudage, caractérisé en ce qu'une poutre de pression (15) portant le pont de courant (7) est prévue, les parties d'extrémités (15a, 15b) de cette poutre faisant saillie jusque dans le plan de soudage (S) et étant guidées de manière à coulisser dans des glissières (16, 17) perpendiculaires au plan de soudage (S) et à pivoter dans le plan de la poutre, et les extrémités inférieures (18, 19) de deux éléments de pression (26, 27) sont articulées aux parties d'extrémité de la poutre de pression (15) à hauteur du plan de soudage, les extrémités supérieures (20, 21) de ces éléments étant articulées aux extrémités d'une seconde poutre (24) montée à pivot en son milieu, l'axe de cette seconde poutre étant parallèle à la ligne reliant les points d'articulation des extrémités inférieures (18, 19) des éléments de pression à la poutre de pression (15).

2. Montage de pont de courant suivant la revendication 1, caractérisé en ce que des vérins hydrauliques ou pneumatiques sont prévus à titre d'éléments de pression (26, 27) et la deuxième poutre (24) est montée à pivot en son milieu dans une articulation (25), mais ne peut pas être déplacée.

3. Montage de pont de courant suivant la revendication 1, caractérisé en ce que des bielles sont prévues à titre d'éléments de pression (26, 27), la deuxième poutre (24) est montée à pivot en son milieu et peut être déplacée dans une direction perpendiculaire au plan de soudage (S) et un vérin (29) agissant sur le point de pivotement (25) de la deuxième poutre (24) est prévu.

4. Montage de pont de courant suivant l'une quelconque des revendications 1 à 3 pour une soudeuse dont les électrodes actives formant un intervalle de soudage par points doubles peuvent être déplacées le long de barres omnibus qui s'étendent dans la direction de l'intervalle de soudage par points doubles et peuvent alors être fixées, caractérisé en ce qu'une barre omnibus (7) s'étendant dans la direction de l'intervalle de soudage par points doubles est prévue sur la poutre de pression (15) à titre de pont de courant, les deux contre-électrodes passives (8, 9) étant montées de manière à pouvoir être déplacées et fixées sur cette barre omnibus.

Fig. 1

Fig. 2